# EUROPÄISCHE PATENTSCHRIFT

(11) **EP 1 928 621 B1**
(45) Veröffentlichungstag und Bekanntmachung des Hinweises auf die Patenterteilung: **26.11.2014**
(21) Anmeldenummer: 06806850.1
(22) Anmeldetag: 27.09.2006
(51) Int. Cl.: B22F 1/00, B01L 3/14, B22F 1/02

(54) **VERFAHREN ZUM DURCHFÜHREN EINER REAKTION IN EINER MIKROREAKTIONSKAMMER**
METHOD FOR CARRYING OUT A REACTION IN A MICROREACTION CHAMBER
PROCEDE POUR METTRE EN OEUVRE UNE REACTION DANS UNE MICRO-CHAMBRE REACTIONNELLE

(30) Priorität: 28.09.2005 DE 102005047758
(43) Veröffentlichungstag der Anmeldung: 11.06.2008
(73) Patentinhaber: Siemens Aktiengesellschaft, 80333 München (DE)
(72) Erfinder: ARNDT, Frank, 13581 Berlin (DE); JENSEN, Jens, Dahl, 14050 Berlin (DE); KRÜGER, Ursus, 14089 Berlin (DE); RÖNSCH, Hendrik, 10711 Berlin (DE)
(86) Internationale Anmeldenummer: PCT/EP2006/066797
(87) Internationale Veröffentlichungsnummer: WO 2007/036539

(56) Entgegenhaltungen:
- EP-A1- 1 666 136
- WO-A-00/61275
- WO-A1-2005/079964
- WO-A2-2005/020659
- GB-A- 2 063 695
- JP-A- 2004 033 901
- US-A1- 2006 053 971

## Beschreibung

Die Erfindung betrifft ein Verfahren zum Durchführen einer Reaktion in einer Mikroreaktionskammer, bei dem Nanopartikel einer ersten Zusammensetzung durch einen ersten Zuführkanal in die Mikroreaktionskammer dosiert eingeleitet werden und Nanopartikel mindestens einer weiteren Zusammensetzung durch mindestens einen weiteren Zuführkanal in die Mikroreaktionskammer dosiert eingeleitet werden, wobei die Nanopartikel unterschiedlicher Zusammensetzung miteinander reagieren und ein so entstehendes Reaktionsprodukt der Mikroreaktionszelle entnommen wird.

Derartige Verfahren sind beispielsweise gemäß der WO 96/41864 bereits bekannt. Sie werden verwendet, um bei DNA-Molekülen die sogenannte polymerase chain reaction (PCR) zu forcieren. Zu diesem Zweck wird eine Lösung, die DNA-Moleküle enthält, der Mikroreaktionskammer zugeführt, wobei die Probe mittels einer Strahlungsquelle durch ein geeignetes Fenster bestrahlt werden kann (beispielsweise mit UV-Licht).

GB 2063695 offenbart ein Verfahren zur Dispersion und einen Apparat zur Erzeugung dieser Dispersion. Das Verfahren umfasst das Dispergieren von zwei unterschiedlichen Flüssigkeiten, wobei jede Flüssigkeit feste Partikel enthalten kann, zur Herstellung einer Suspension oder Emulsion. Die Partikel haben Durchmesser im Nanometerbereich.

Gemäß der WO 2005/020659 A2 ist es bekannt, Nanopartikel beispielsweise aus Siliziumoxid, Zirkonoxid oder Ceroxid durch einen ersten Zuführkanal in eine Reaktionskammer zu dosieren, wobei diese beispielsweise mit Aminosäuren oder Peptiden reagieren können, die durch einen weiteren Zuführkanal zugeführt werden. Aus der WO 2005/079964 A1 ist es bekannt, dass ein Mikromischer zum Einsatz kommen kann, um Suspensionen durch einen ersten Kanal und einen zweiten Kanal dem Mikromischer zuzuführen. Hierbei entsteht eine Misch- und Reaktionszone, in der auch Reaktionen der beiden Suspensionen untereinander stattfinden können. Gemäß der EP 1 666 136 A1 ist es außerdem bekannt, dass ein Mikroreaktor zwei Zuführkanäle aufweisen kann, welche zu einer Mischzone zusammenlaufen, welche ihrerseits in eine Mikroreaktionskammer mündet. In dieser Mikroreaktionskammer können beispielsweise chemische Reaktionen der in den zugeführten Fluiden vorhandenen Nanopartikel nachgewiesen werden.

Die Aufgabe der Erfindung besteht darin, ein Verfahren zum Durchführen von Reaktion in Mikroreaktionskammern neuen Anwendungen zugänglich zu machen.

Diese Aufgabe wird erfindungsgemäß durch ein Verfahren zum Durchführen einer Reaktion mit einer Mikroreaktionskammer gelöst, dass zumindest die Nanopartikel der ersten Zusammensetzung an der Oberfläche funktionalisiert werden, bevor sie in die Reaktionskammer eingeleitet werden. Unter einer Funktionalisierung im Sinne der Erfindung ist im weitesten Sinne jede denkbare Art einer Behandlung der Nanopartikel zu verstehen, die ihr Reaktionsverhalten in einer gewünschten Weise beeinflussen. Diese kann beispielsweise aus einer Verkapselung der Nanopartikel mit einem Kapselmaterial bestehen. Auβerdem ist es möglich, die Oberfläche der Nanopartikel zu modifizieren, beispielsweise durch Dotierung derselben mit bestimmten Legierungsbestandteilen. Ein Verfahren zur Funktionalisierung von Nanopartikeln wird auch durch die so genannte LBL-Technologie® (LBL steht für layer by layer) zur Verfügung gestellt. Dieses Verfahren wurde von der Capsulution NanoScience AG, Berlin (www.capsulution.com) entwickelt und 2003 in einem Firmenprospekt veröffentlicht. Durch geeignete Ladung der Nanopartikel einerseits und der zu beschichtenden Substanzen andererseits können letztere aus einer Suspension auf den Nanopartikeln abgeschieden werden, wobei sehr dünne Verkapselungen der Nanopartikel entstehen. Die Funktionalisierung kann vorteilhaft beispielsweise durch eine Schicht auf den Nanopartikeln gebildet werden.

Dabei kann die dosierte Einleitung beispielsweise mittels eines Trägermediums für die Nanopartikel erfolgen, welches flüssig oder gasförmig ist. Dieses Trägermedium kann auch an der Reaktion beteiligt sein (z. B. Sauerstoff des Trägergases an einer Oxidation der Oberfläche von Nanopartikeln). Es ist jedoch auch möglich, dass die Reaktion in der Mikroreaktionskammer im Vakuum erfolgt, so dass die Nanopartikel als solche in die Reaktionskammer eingeleitet werden.

Bei der Reaktion der Nanopartikel unterschiedlicher Zusammensetzung kann das Reaktionsprodukt eine neue Zusammensetzung aufweisen. Als Reaktion kann jedoch auch bewirkt werden, dass die Nanopartikel unterschiedlicher Zusammensetzung aneinander anlagern und die Zusammensetzungen der einzelnen Nanopartikel im Reaktionsprodukt erhalten bleiben.

Das Reaktionsprodukt selbst liegt vorzugsweise wieder als Nanopartikel vor. Es ist jedoch auch denkbar, dass durch eine Agglomeration der Nanopartikel größere Verbände entstehen, die beispielsweise die Abmessungen von Mikropartikeln aufweisen können.

Als Nanopartikel im Sinne der Erfindung werden Partikel mit einem Durchmesser im Nanometerbereich verstanden, das heißt Partikel, die Abmessungen von kleiner als einem Mikrometer aufweisen. Dabei weisen die Nanopartikel eine Matrix einer bestimmten gewünschten Zusammensetzung auf und können zusätzlich einen mehrlagigen Aufbau aufweisen. Als Mikropartikel im Sinne der Erfindung werden Partikel mit Abmessungen im Mikrometerbereich verstanden.

Die erfindungsgemäße Verwendung von Mikroreaktionskammern zur Durchführung von Reaktionen zwischen Nanopartikeln hat den Vorteil, dass die Verfahrensführung sehr genau gesteuert werden kann. Beispielsweise ist eine sehr genaue Dosierung der Nanopartikel möglich, so dass bei der Agglomeration beispielsweise eine gewünschte Legierungszusammensetzung genau eingestellt werden kann. Gleichzeitig kann durch Zugabe sehr geringer Mengen von Nanopartikeln verhindert werden, dass die Nanopartikel, die aufgrund ihrer im Verhältnis zum Volumen großen Obefläche eine hohe Oberflächenenergie aufweisen, nach der Dosierung ungewünschte Reaktionen, beispielsweise mit anderen Nanopartikeln, eingehen. Daher kann die jeweils gewünschte Reaktion mit einem hohen Wirkungsgrad in der Mikroreaktionskammer bewirkt werden.

Das Verfahren kann weiter verbessert werden, wenn der Mikroreaktionskammer während der Reaktion der Nanopartikel kontrolliert Energie zugeführt oder entzogen wird. Hierdurch ist eine gezielte Reaktionsführung der Reaktion in der Mikroreaktionskammer möglich. Durch Zuführung von Energie kann beispielsweise eine endotherme Reaktion ausgelöst werden, wobei die Aktivierungsenergien aufgrund der sehr geringen Größe der Nanopartikel nicht sehr groß sein müssen. Die Energie kann beispielsweise mittels einer Heizung oder auch in Form von Strahlung (Laserstrahl, UV-Licht) zugeführt werden. Ein Entzug von Energie kann beispielsweise durch eine Kühlvorrichtung (Peltier-Elemente) erfolgen. Ein Energieentzug ist beispielsweise bei einer exothermen Reaktion sinnvoll, deren Ablauf gebremst werden soll.

Besonders vorteilhaft ist es, wenn, wie bereits erwähnt, das Reaktionsprodukt ebenfalls aus Nanopartikeln besteht. Auf diese Weise lassen sich Nanopartikel mit spezifischen Anforderungsprofilen aus Zwischenprodukten bilden, die ebenfalls als Nanopartikel vorliegen. Vorstellbare Anwendungen sind beispielsweise das Legieren von Nanopartikeln aus elementaren Nanopartikeln, wobei die Legierungszusammensetung genau bestimmt werden kann. Es ist auch möglich, Nanopartikel einer einfacheren Legierung zu komplizierteren Legierungen zu "verschmelzen". Eine andere Anwendungsmöglichkeit liegt darin, dass die als Reaktionsprodukt vorliegenden Nanopartikel jeweils aus einer kleinen Menge von Nanopartikeln der ersten und zweiten Zusammensetzung (und evtl. weiteren Zusammensetzungen) zusammengesetzt sind. Man kann hierbei von einem "Design" von Nanopartikeln sprechen, welche auf beliebige Anwendungsfälle mit bestimmten Anforderungsprofilen angepasst werden können.

Weiterhin ist es vorteilhaft, wenn die Dosierung der Nanopartikel durch ein Magnetfeld unterstützt wird, welches den betreffenden Zuführkanal überlagert, wobei die Nanopartikel vor der Dosierung magnetisiert werden. Genauso ist es denkbar, dass die Dosierung der Nanopartikel durch ein elektrisches Feld unterstützt wird, welches den betreffenden Zuführkanal überlagert, wobei die Nanopartikel vor der Dosierung elektrisch geladen werden. Durch diese Maßnahmen wird der Transport der Nanopartikel aus einem geeigneten Vorrat in die Mikroreaktionskammer unterstützt, da sich magnetisierte Nanopartikel im Magnetfeld und elektrisch geladene Nanopartikel im elektrischen Feld bewegen können. Durch Einstellung beispielsweise der Feldstärke des entsprechenden Feldes kann damit vorteilhaft die Dosierung genau eingestellt werden. Hierzu ist durch Versuche mit einer entsprechend ausgestatteten Anordnung mit Mikroreaktionskammer zu ermitteln, welche Feldstärken für die jeweils zu erreichende Dosierung notwendig sind. Die Wirkungsweise des genannten Transportsystems ist in dem deutschen Offenlegungsschrift DE102004030523 A1 (internationaler Offenlegungsnummer WO2005/123978) näher beschrieben.

Eine gleichartige elektrische Ladung der Nanopartikel hat weiterhin den Vorteil, dass sich die Nanopartikel voneinander abstoßen, was eine Neigung zur Agglomeration der Nanopartikel aufgrund ihrer hohen Oberflächenenergie vermeidet.

Weiterhin ist es vorteilhaft, wenn die Nanopartikel kontinuierlich zugeführt und die Reaktionsprodukte kontinuierlich entnommen werden. Dabei hat die Dosierung der Nanopartikel so zu erfolgen, dass in der kontinuierlich ablaufenden Reaktion in der Mikroreaktionskammer immer alle Reaktionspartner in einem geeigneten Verhältnis vorliegen. Durch Herbeiführung eines kontinuierlichen Reaktionsprozesses in der Reaktionskammer wird vorteilhaft eine Qualitätsverbesserung der Reaktionsprodukte bewirkt, da sich der Reaktionsprozess auf stationäre Reaktionsparameter "einschwingen" kann.

Weiterhin ist es vorteilhaft, wenn der Mikroreaktionskammer eine fluidische Reaktionskomponente zugesetzt wird, die an der Reaktion der Nanopartikel beteiligt ist. Hierbei könnte beispielsweise eine Oxidation von der Oberfläche metallischer Nanopartikel erreicht werden, in dem Sauerstoff als reaktives Gas der Mikroreaktionskammer zugesetzt wird. Hierdurch wird vorteilhaft eine zusätzliche Möglichkeit geschaffen, um die Reaktion in der Mikroreaktionskammer zu beeinflussen.

Weitere Einzelheiten der Erfindung werden im Folgenden anhand der Zeichnung beschrieben. Gleiche oder sich entsprechende Zeichnungselemente sind in den Figuren mit jeweils den gleichen Bezugszeichen versehen und werden nur insoweit mehrfach erläutert, wie sich zwischen den Figuren Unterschiede ergeben. Es zeigen
- Figur 1: den schematischen Schnitt durch eine Mikroreaktionskammer zur Durchführung eines Ausführungsbeispiels des erfindungsgemäßen Verfahrens, und die
- Figuren 2 und 3: schematisch die Reaktion von Nanopartikeln gemäß einem Ausführungsbeispiel des erfindungsgemäßen Verfahrens.

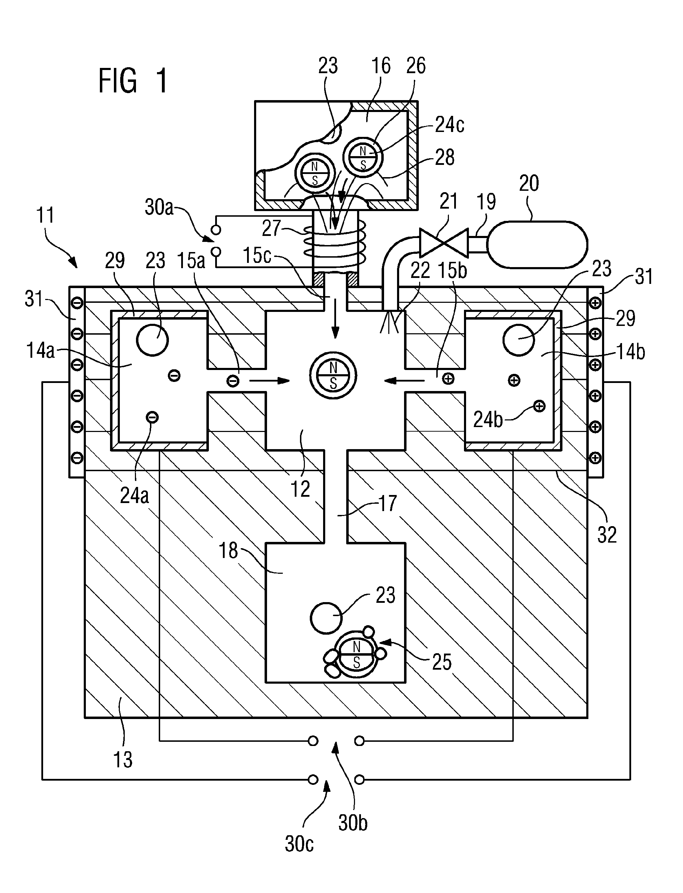

In Figur 1 ist eine Mikroreaktionseinrichtung 11 mit einer Mikroreaktionskammer 12 als Herzstück dargestellt. Die Mikroreaktionskammer ist ätztechnisch in einem Siliziumsubstrat 13 hergestellt, welches geschnitten dargestellt ist. Weiterhin sind in dem Siliziumsubstrat Vorratskammern 14a, 14b vorgesehen, die über Zuführkanäle 15a, 15b mit der Mikroreaktionskammer 12 verbunden sind. Zusätzlich gibt es eine externe Vorratskammer 16, die an einen Zuführkanal 15c angesetzt werden kann, um eine Verbindung mit der Mikroreaktionskammer 12 herzustellen. Zuletzt ist über einen Auslasskanal 17 eine Kammer 18 für die in der Mikroreaktionskammer 12 entstandenen Reaktionsprodukte vorgesehen. Die Kammern 14a, 14b und 18 sowie die Kanäle 15a, 15b, teilweise 15c und 17 sind ebenfalls in Ätztechnik in dem Siliziumsubstrat 13 hergestellt.

Weiterhin ist über eine Zuführleitung 19 ein Behälter 20 für ein Fluid, also ein Gas oder eine Flüssigkeit oder ein Gemisch aus beidem, verbunden. Aus diesem kann bei Öffnung eines Ventils 21, insbesondere eine fluidische Reaktionskomponente 22 der Mikroreaktionskammer 12 zugeführt werden. Während eine fluidische Reaktionskomponente an der in der Mikroreaktionskammer 12 ablaufenden Reaktion beteiligt ist, kann beispielsweise auch ein inertes Fluid (beispielsweise Stickstoff oder ein Edelgas) zugeführt werden, um den Transport bzw. die Vermischung der nanopartikulären Reaktionspartner zu verbessern. Weiterhin kann durch das Fluid der Transport der Reaktionsprodukte durch den Auslasskanal unterstützt werden.

Die Vorratskammern 14a, 14b und 16 sowie die Kammer 18 haben Öffnungen 23, über die an der Reaktion beteiligte Nanopartikel 24a, 24b, 24c in die Vorratskammern eingefüllt bzw. ein Reaktionsprodukt 25 aus der Kammer 18 entnommen werden kann. Die Nanopartikel 24c sind magnetisiert und besitzen überdies eine Schicht 26 auf der Oberfläche, die eine Verkapselung der Nanopartikel 24c gewährleistet. Der aus dem Siliziumsubstrat 13 herausragende Teil des Zuführkanals 15c ist mit einer elektrischen Spule 27 umgeben, mit der sich mit Hilfe einer Spannungsquelle 30a ein Magnetfeld in dem Zuführkanal 15c erzeugen lässt, welches in der Vorratskammer 16 und der Reaktionskammer 12 mit zunehmendem Abstand vom Zuführkanal 15c abschwächt. Durch diese Feldstärkeverteilung des Magnetfeldes (Feldlinien 28) werden die Nanopartikel 24c in der Vorratskammer 16 zum Eingang des Zuführkanals 15c beschleunigt und nach Austreten in die Reaktionskammer wieder abgebremst, so dass sie hier für die Reaktion zur Verfügung steht.

Die Nanopartikel 24a in der Vorratskammer 14a werden negativ geladen und die Nanopartikel 24b in der Vorratskammer 14b positiv. Zu diesem Zweck sind die Wandungen der Reaktionskammern 14a, 14b mit einer Elektrodenbeschichtung 29 ausgekleidet, die mit einer Spannungsquelle 30b verbunden sind. Hierdurch gelingt eine positive bzw. negative Aufladung der Nanopartikel 24a, 24b. Weiterhin sind an den Seitenflächen des Siliziumsubstrates 13 Kondensatorplatten 31 angebracht, die durch eine Spannungsquelle 30c aufgeladen werden, so dass ein elektrisches Feld (Feldlinien 32) entsteht. Dieses ist genügend stark ausgeprägt, dass Feldeffekte durch die Aufladung der Elektrodenbeschichtungen 29 überlagert werden. Das elektrische Feld unterstützt daher den Transport der elektrisch geladenen Nanopartikel 14a, 14b in die Reaktionskammer 12, wo sie sich auf der Schicht 26 der Nanopartikel 24c anlagern. Dabei ist ein Ladungsaustausch zwischen den verschiedenartig geladenen Nanopartikeln möglich, wobei dieser Ladungsaustausch zudem bewirkt, dass sich bevorzugt verschiedenartig geladene Nanopartikel benachbart an der Schicht 26 anlagern. Das nanopartikuläre Reaktionsprodukt 25 ist dann im Wesentlichen elektrisch neutral.

Das Siliziumsubstrat 13 kann von der Seite der dargestellten Aufsicht mit einem nicht dargestellten Deckelbauteil versehen werden, so dass die Vorratskammern 14a, 14b, die Reaktionskammer 12 und die Kammer 18 verschlossen werden. In diesem Deckelbauteil kann in ebenfalls nicht dargestellter Weise eine Wärmeableitung beispielsweise durch in den Deckel integrierte Kühlkanäle erfolgen. Ebenso ist eine Energiezuführung möglich, beispielsweise kann das Deckelbauteil transparent ausgeführt sein und so die Einspeisung von Laserlicht in die Reaktionskammer 12 ermöglichen.

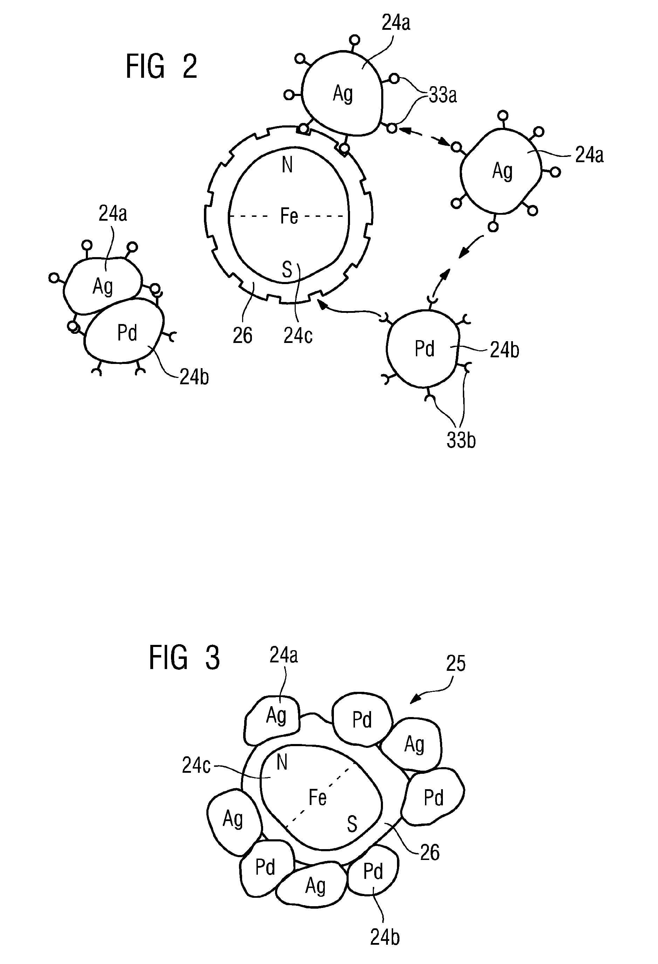

Der Figur 2 lässt sich beispielhaft eine Reaktion entnehmen, wie sie mit der Mikroreaktionseinrichtung 11 durchgeführt werden kann. Das magnetisierbare Nanopartikel 24c besteht aus Eisen (Fe) und besitzt eine polymerische Schicht 26 als Verkapselung. Dieses Nanopartikel aus Eisen bildet den Kern für ein Agglomerat von einer begrenzten Anzahl von Nanopartikeln gemäß Figur 3, welches selbst noch die Abmessungen eines Nanopartikels aufweist. Die an das magnetische Nanopartikel 24c angelagerten Nanopartikel 24a, 14b sind, wie sich Figur 2 entnehmen lässt, an der Oberfläche mit spezifischen Molekülen 33a, 33b funktionalisiert, so dass eine Bindung zwischen jeweils gleichartigen Nanopartikeln 24a, 24b zumindest deutlich erschwert wird. Daher lagern sich bevorzugt jeweils verschiedenartige Nanopartikel 24a, 24b aneinander (Schlüssel-Schloss-Prinzip). Die Nanopartikel 24a bestehen aus Silber (Ag) und die Nanopartikel 24b aus Palladium (Pd). Die in der beschriebenen Weise aneinander gelagerten Nanopartikel ergeben daher elektrische Lokalelemente, die in einer elektrisch leitfähigen Flüssigkeit antimikrobiell wirken.

Die Schicht 26 ermöglicht eine unspezifische Anlagerung der Moleküle 33a, 33b, so dass die Agglomerate aus Nanopartikeln 24a, 24b auf der Schicht angelagert werden können. Die Schicht gewährleistet weiterhin, dass das Nanopartikel 24c elektrisch isoliert wird, und daher in einer elektrisch leitfähigen Flüssigkeit keine Lokalelemente mit den Nanopartikeln 24a, 24b bilden kann. Gleichzeitig gewährleistet die Magnetisierbarkeit des Nanopartikels 24c beispielsweise einen Transport des Reaktionsproduktes 25 in der elektrochemisch leitfähigen Flüssigkeit.

## Patentansprüche

1. Verfahren zum Durchführen einer Reaktion in einer Mikroreaktionskammer (12), bei dem
- Nanopartikel (24c) einer ersten Zusammensetzung durch einen ersten Zuführkanal (15c) in die Mikroreaktionskammer dosiert eingeleitet werden und
- Nanopartikel (24a, 25b) mindestens einer weiteren Zusammensetzung durch mindestes einen weiteren Zuführkanal (15a, 15b) in die Mikroreaktionskammer dosiert eingeleitet werden,
wobei die Nanopartikel unterschiedlicher Zusammensetzung miteinander reagieren und ein so entstandenes Reaktionsprodukt (25) der Mikroreaktionszelle (12) entnommen wird,
**dadurch gekennzeichnet,**
**dass** zumindest die Nanopartikel (24c) der ersten Zusammensetzung an der Oberfläche funktionalisiert werden, bevor sie in die Reaktionskammer eingeleitet werden.

2. Verfahren nach Anspruch 1,
**dadurch gekennzeichnet,**
**dass** die Funktionalisierung durch eine Schicht (26) auf den Nanopartikeln (24c) gebildet wird.

3. Verfahren nach einem der voranstehenden Ansprüche, **dadurch gekennzeichnet,**
**dass** der Mikroreaktionskammer (12) während der Reaktion der Nanopartikel (24a, 24b, 24c) kontrolliert Energie zugeführt oder entzogen wird.

4. Verfahren nach einem der voranstehenden Ansprüche, **dadurch gekennzeichnet,**
**dass** das Reaktionsprodukt (25) ebenfalls aus Nanopartikeln besteht.

5. Verfahren nach einem der voranstehenden Ansprüche,
**dadurch gekennzeichnet,**
**dass** die Dosierung der Nanopartikel (24c) durch ein Magnetfeld (28) unterstützt wird, welches den betreffenden Zuführkanal (15c) überlagert, wobei die Nanopartikel vor der Dosierung magnetisiert werden.

6. Verfahren nach einem der Ansprüche 1 bis 4,
**dadurch gekennzeichnet,**
**dass** die Dosierung der Nanopartikel (24a, 24b) durch ein elektrisches Feld (32) unterstützt wird, welches den betreffenden Zuführkanal (15a, 15b) überlagert, wobei die Nanopartikel vor der Dosierung elektrisch geladen werden.

7. Verfahren nach einem der voranstehenden Ansprüche,
**dadurch gekennzeichnet,**
**dass** die Nanopartikel (24a, 24b) kontinuierlich zugeführt und die Reaktionsprodukte (20) kontinuierlich entnommen werden.

8. Verfahren nach einem der voranstehenden Ansprüche,
**dadurch gekennzeichnet,**
**dass** der Mikroreaktionskammer eine fluidische Reaktionskomponente (22) zugesetzt wird, die an der Reaktion der Nanopartikel (24a, 24b) beteiligt ist.

## Claims

1. Method of carrying out a reaction in a microreaction chamber (12), whereby
- nanoparticles (24c) of a first composition are introduced in a dosed manner through a first feed channel (15c) into the microreaction chamber and
- nanoparticles (24a, 25b) of at least one further composition are introduced in a dosed manner through at least one further feed channel (15a, 15b) into the microreaction chamber,
wherein the nanoparticles of differing composition react with one another and a reaction product (25) thus produced is removed from the microreaction cell (12). **characterised in that**
at least the nanoparticles (24c) of the first composition are functionalised at the surface before they are introduced into the reaction chamber.

2. Method according to claim 1,
**characterised in that**
the functionalising is formed by a layer (26) on the nanoparticles (24c).

3. Method according to one of the preceding claims,
**characterised in that**
energy is supplied to or removed from the microreaction chamber (12) in a controlled manner during the reaction of the nanoparticles (24a, 24b, 24c).

4. Method according to one of the preceding claims,
**characterised in that**
the reaction product (25) likewise comprises nanoparticles.

5. Method according to one of the preceding claims,
**characterised in that**
the dosing of the nanoparticles (24c) is assisted by means of a magnetic field (28) that is superposed on the relevant feed channel (15c), the nanoparticles being magnetised prior to the dosing.

6. Method according to one of claims 1 to 4,
**characterised in that**
the dosing of the nanoparticles (24a, 24b) is assisted by means of an electric field (32) that is superposed on the relevant feed channel (15a, 15b), the nanoparticles being electrically charged prior to the dosing.

7. Method according to one of the preceding claims,
**characterised in that**
the nanoparticles (24a, 24b) are continuously fed and the reaction products (25) are continuously removed.

8. Method according to one of the preceding claims,
**characterised in that**
there is added to the microreaction chamber a fluid reaction component (22) that is involved in the reaction of the nanoparticles (24a, 24b).

## Revendications

1. Procédé pour effectuer une réaction dans une chambre ( 12 ) de microréaction, dans lequel
- on envoie, de manière dosée, dans la chambre de microréaction, par un premier canal ( 15c ) d'envoi, des nanoparticules ( 24c ) d'une première composition et
- on envoie, de manière dosée, dans la chambre de microréaction, par au moins un autre canal ( 15a, 15b ) d'envoi, des nanoparticules ( 24a, 25b ) d'au moins une autre composition,
dans lequel les nanoparticules de composition différente réagissent entre elles et on prélève un produit ( 25 ) de réaction ainsi créé de la cellule ( 12 ) de microréaction, **caractérisé**
**en ce que** au moins les nanoparticules ( 24c ) de la première composition sont fonctionnalisées sur la surface avant d'être envoyées dans la chambre de réaction.

2. Procédé suivant la revendication 1,
**caractérisé**
**en ce que** la fonctionnalisation est formée par une couche ( 26 ) sur les nanoparticules ( 24c ).

3. Procédé suivant l'une des revendications précédentes,
**caractérisé**
**en ce que** l'on apporte ou l'on retire de l'énergie d'une manière contrôlée de la chambre ( 12 ) de microréaction pendant la réaction des nanoparticules ( 24a, 24b, 24c ).

4. Procédé suivant l'une des revendications précédentes,
**caractérisé**
**en ce que** le produit ( 25 ) de réaction est constitué également de nanoparticules.

5. Procédé suivant l'une des revendications précédentes,
**caractérisé**
**en ce que** l'on assiste l'envoi de manière dosée des nanoparticules ( 24c ) par un champ ( 28 ) magnétique, qui se superpose au canal ( 15c ) d'envoi concerné, les nanoparticules étant aimantées avant l'envoi de manière dosée.

6. Procédé suivant l'une des revendications 1 à 4,
**caractérisé**
**en ce que** l'on assiste l'envoi de manière dosée des nanoparticules ( 24a, 24b ) par un champ ( 32 ) électrique, qui se superpose au canal ( 15a, 15b ) d'envoi concerné, les nanoparticules étant chargées électriquement avant l'envoi de manière dosée.

7. Procédé suivant l'une des revendications précédentes,
**caractérisé**
**en ce que** l'on envoie en continu les nanoparticules ( 24a, 24b ) et en ce que l'on retire en continu les produits ( 20 ) de réaction.

8. Procédé suivant l'une des revendications précédentes,
**caractérisé**
**en ce qu'**un constituant ( 22 ) de réaction fluide, qui participe à la réaction des nanoparticules ( 24a, 24b ), est ajouté dans la chambre de microréaction.
